# EUROPÄISCHE PATENTANMELDUNG

(11) **EP 4 290 756 A1**
(43) Veröffentlichungstag der Anmeldung: **13.12.2023**
(21) Anmeldenummer: 22177435.9
(22) Anmeldetag: 07.06.2022
(51) Int. Cl.: H02P 3/18, H02P 3/14, H02P 3/12, H02P 3/08, H02P 3/22, H02P 6/24, B25F 5/00

(54) **VERFAHREN ZUM GEREGELTEN BREMSEN EINER WERKZEUGMASCHINE UND WERKZEUGMASCHINE**

(71) Anmelder: Hilti Aktiengesellschaft, 9494 Schaan (LI)
(72) Erfinder: Ringler, Stefan, 86853 Schwabmühlhausen (DE); Herzig, Michael, 86899 Landsberg (DE)
(74) Vertreter: Hilti Aktiengesellschaft Corporate Intellectual Property

(57) **Zusammenfassung**

Die vorliegende Erfindung betrifft ein Verfahren zum Betrieb einer Werkzeugmaschine, wobei die Werkzeugmaschine einen Motor, eine Motorsteuerung und ein Werkzeug aufweist und wobei die Werkzeugmaschine zur Versorgung mit elektrischer Energie mit einer Energieversorgungsvorrichtung verbunden werden kann. Wenn während des Betriebs die Energieversorgungsvorrichtung entfernt wird, kann eine Bremssteuerung der Werkzeugmaschine aktiviert werden, bei der in einem ersten Schritt die Motorsteuerung der Werkzeugmaschine mit einer Einschaltdauer ED von im Wesentlichen 100 % betrieben wird, bis eine interne Versorgungspannung der Werkzeugmaschine einen unteren Grenzwert erreicht hat und wobei die Motorsteuerung der Werkzeugmaschine in einem zweiten Schritt für eine Zeitspanne delta t mit einer reduzierten Einschaltdauer ED_red betrieben wird, wobei während dieser Zeitspanne delta t ein interner Energiespeicher der Werkzeugmaschine mit elektrischer Energie aufgeladen werden kann. In einem zweiten Aspekt betrifft die Erfindung eine Werkzeugmaschine zur Durchführung des vorgeschlagenen Verfahrens.

## Beschreibung

Die vorliegende Erfindung betrifft ein Verfahren zum Betrieb einer Werkzeugmaschine, wobei die Werkzeugmaschine einen Motor, eine Motorsteuerung und ein Werkzeug aufweist und wobei die Werkzeugmaschine zur Versorgung mit elektrischer Energie mit einer Energieversorgungsvorrichtung verbunden werden kann. Wenn während des Betriebs die Energieversorgungsvorrichtung entfernt wird, kann eine Bremssteuerung der Werkzeugmaschine aktiviert werden, bei der in einem ersten Schritt die Motorsteuerung der Werkzeugmaschine mit einer Einschaltdauer ED von im Wesentlichen 100 % betrieben wird, bis eine interne Versorgungspannung der Werkzeugmaschine einen unteren Grenzwert erreicht hat und wobei die Motorsteuerung der Werkzeugmaschine in einem zweiten Schritt für eine Zeitspanne delta t mit einer reduzierten Einschaltdauer ED_red betrieben wird, wobei während dieser Zeitspanne delta t ein interner Energiespeicher der Werkzeugmaschine mit elektrischer Energie aufgeladen werden kann. In einem zweiten Aspekt betrifft die Erfindung eine Werkzeugmaschine zur Durchführung des vorgeschlagenen Verfahrens.

### Hintergrund der Erfindung:

Im Bereich der Werkzeugmaschinen, die vorzugsweise auf Baustellen eingesetzt werden, werden zunehmend batteriebetriebene Werkzeugmaschine eingesetzt, die eine Energieversorgungsvorrichtung, wie eine Batterie oder einen Akkumulator, umfassen. Bei solchen batteriebetriebenen Werkzeugmaschinen ist es möglich, die Energieversorgungsvorrichtung zu entfernen, während der Motor der Werkzeugmaschine läuft. Durch das Entfemen der Energiequelle wird die Werkzeugmaschine üblicherweise nur noch aus den integrierten Kondensatoren der Steuerung der Werkzeugmaschine mit elektrischer Energie versorgt. Eine Kontrolle, d.h. Steuerung, des Motors der Werkzeugmaschine ist bei Entfernung der Energieversorgungsvorrichtung in der Regel nur noch solange möglich, wie die Kondensatoren eine dafür ausreichend große Spannung liefem. Wenn die Kondensatoren als interner Energiespeicher der Werkzeugmaschine entladen sind, kann nachteiligerweise keine Ansteuerung des Motors der Werkzeugmaschine mehr erfolgen. Die Werkzeugmaschine läuft dann ein einem ungeregelten Zustand aus.

Die Aufgabe, die der vorliegenden Erfindung zugrunde liegt, besteht darin, die vorstehend beschriebenen Mängel und Nachteile des Standes der Technik zu überwinden und geregeltes Bremsen des Motors einer Werkzeugmaschine bereitzustellen, bei dem eine interne Energieversorgung der Werkzeugmaschine möglichst lange aufrechterhalten werden soll. Die Fachwelt würde es insbesondere begrüßen, wenn mit der Erfindung die interne Energieversorgung der Werkzeugmaschine so lange aufrechterhalten wird, bis der Motor der Werkzeugmaschine zu einem Stillstand kommt. Darüber hinaus soll mit der Erfindung eine Werkzeugmaschine bereitgestellt werden, mit der das vorgeschlagene Verfahren durchgeführt werden kann.

Die Angabe eines Bremsverfahrens, mit dem die interne Energieversorgung einer Werkzeugmaschine möglichst lange aufrechterhalten werden kann, ist insbesondere für solche Werkzeugmaschine wünschenswert, deren Motoren in Feldschwächung betrieben werden. Bei solchen Werkzeugmaschinen kann bei Entfernung der Energieversorgungsvorrichtung plötzlich eine deutliche höhere generatorische Spannung ("Generatorspannung") entstehen als die Quellenspannung durch die plötzlich unterbrochene Energieversorgung und die damit verbundene plötzliche Unterbrechung der Steuerung der Werkzeugmaschine. Die entstehende Generatorspannung kann unter Umständen eine Gefahr für die elektronischen Komponenten der Werkzeugmaschine darstellen. Daher besteht ein weiteres Anliegen der Erfindung darin, ein geregeltes Bremsverfahren für eine Werkzeugmaschine anzugeben, mit dem die elektronischen Komponenten der Werkzeugmaschine gut gegen solche etwaigen hohen Generatorspannungen geschützt werden können.

Beispielsweise kann ein Entfernen der Energieversorgungsvorrichtung, während der Motor der Werkzeugmaschine angesteuert wird, auch dazu führen, dass die Ansteuerung des Motors unterbrochen wird, so dass der Motor im Wesentlichen ungesteuert ausläuft. Dies liegt daran, dass die Versorgungsspannung der Motorsteuerung der Werkzeugmaschine in der Regel vor dem Erreichen des Stillstands des Motors der Werkzeugmaschine zusammenbricht. Insofern besteht ein weiteres Anliegen der Erfindung darin, ein Bremsverfahren für solche Werkzeugmaschinen anzugeben, deren Motoren in Feldschwächung betrieben werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Betrieb einer Werkzeugmaschine vorgesehen, wobei die Werkzeugmaschine einen Motor, eine Motorsteuerung und ein Werkzeug aufweist und wobei die Werkzeugmaschine zur Versorgung mit elektrischer Energie mit einer Energieversorgungsvorrichtung verbunden werden kann. Das vorgeschlagene Betriebsverfahren ist durch die folgenden Verfahrensschritte gekennzeichnet:
a) Betrieb der Werkzeugmaschine, wobei die Werkzeugmaschine während ihres Betriebs von der Energieversorgungsvorrichtung mit elektrischer Energie versorgt wird,
b) Entfernung der Energieversorgungsvorrichtung während des Betriebs der Werkzeugmaschine,
c) Aktivierung einer Bremssteuerung der Werkzeugmaschine, wenn die Werkzeugmaschine erkennt, dass die Energieversorgungsvorrichtung während ihres Betriebs entfernt wurde, wobei die Bremssteuerung die folgenden Schritte umfasst:
   (1) Ansteuerung des Motors der Werkzeugmaschine mit einer Einschaltdauer ED von im Wesentlichen 100 %, bis eine interne Versorgungspannung der Werkzeugmaschine einen unteren Grenzwert erreicht hat,
   (2) Änderung der Einschaltdauer auf eine reduzierte Einschaltdauer ED_red von kleiner als im Wesentlichen 100 % für eine Zeitspanne delta t, wobei während dieser Zeitspanne delta t ein interner Energiespeicher der Werkzeugmaschine mit elektrischer Energie aufgeladen wird.

Mit der Erfindung kann vorteilhafterweise ein geregeltes Bremsen des Motors der Werkzeugmaschine bereitgestellt werden, mit dem eine interne Energieversorgung einer Elektronik der Werkzeugmaschine so lange aufrechterhalten werden kann, bis der Motor der Werkzeugmaschine vorzugsweise im Wesentlichen stillsteht. Dadurch kann die Werkzeugmaschine bei Entfernen der Energieversorgungsvorrichtung besonders schnell in einen sicheren Zustand gebracht werden, in dem das Werkzeug und/oder der Motor der Werkzeugmaschine stillstehen. Die Aufrechterhaltung der internen Energieversorgung kann vorteilhafterweise durch den Schritt (2) der Bremssteuerung erreicht werden, bei dem elektrische Energie, die beim Abbremsen der Werkzeugmaschine frei wird, in den internen Energiespeicher der Werkzeugmaschine zurückgespeist wird. Der Schritt (2) der Bremssteuerung kann daher vorzugsweise auch als "Rekuperations-Schritt" bezeichnet werden. Die Aufrechterhaltung der internen Energieversorgung ermöglicht es, dass die Werkzeugmaschine bzw. ihr Motor geregelt, d.h. kontrolliert, abgebremst und so in einen sicheren Zustand, insbesondere einen Stillstand, überführt werden kann. Es ist im Sinne der Erfindung ganz besonders bevorzugt, dass der Motor der Werkzeugmaschine als bürstenloser Motor ausgebildet ist.

Es hat sich gezeigt, dass das vorgeschlagene Verfahren insbesondere bei solchen Werkzeugmaschinen wirksam eingesetzt werden kann, deren Motoren in Feldschwächung betrieben werden. Es ist im Sinne der Erfindung bevorzugt, dass die vorgeschlagene Werkzeugmaschine einen Motor aufweist, der in Feldschwächung betrieben wird. Vorteilhafterweise sind solche Motoren dazu eingerichtet, mit einer höheren Drehzahl zu rotieren als Motoren, die nicht in Feldschwächung betrieben werden. Es ist im Sinne der Erfindung ganz besonders bevorzugt, dass der Motor der vorgeschlagenen Werkzeugmaschine dazu eingerichtet ist, mit einer höheren Drehzahl zu rotieren, als durch die Quellenspannung der Spannungsversorgung und die Rotormagnetisierung vorgesehen. Die höhere Drehzahl kann insbesondere dadurch erreicht werden, da durch eine gezielte Ansteuerung des Stators des Motors das Rotormagnetfeld geschwächt werden kann. Wenn der Motor der vorgeschlagenen Werkzeugmaschine in Feldschwächung betrieben wird und plötzlich die Spannungsversorgung des Motors durch Entfernen der Energieversorgungsvorrichtung entfernt wird, kann die Feldschwächung zusammenbrechen. Dadurch kann die Rotormagnetisierung wieder wirksam werden, wobei durch dieses Magnetfeld und die damit verbundene hohe Drehzahl des Motors ebenfalls plötzlich eine sehr hohe generatorische Spannung entstehen kann, die eine Gefahr für die elektronischen Komponenten der Werkzeugmaschine darstellen kann. Um diese Gefahr auszuschließen, wird im Kontext der vorliegenden Erfindung vorgeschlagen, diese hohe generatorische Spannung durch die Einschaltdauer ED in einem Bereich von 100 % kurzzuschließen. Auf diese Weise stellt das vorgeschlagene Verfahren vor allem für Werkzeugmaschinen, deren Motoren in Feldschwächung betrieben werden, ein sicheres und schnelles Bremsverfahren dar. Insbesondere kann mit dem vorgeschlagenen Bremsverfahren die Werkzeugmaschine sicher aus dem potentiell gefährlichen hohen Drehzahlbereich in den sicheren Stillstand gebracht bzw. abgebremst werden.

Es ist im Sinne der Erfindung bevorzugt, dass die Bremssteuerung der Werkzeugmaschine dadurch aktiviert werden kann, dass die Werkzeugmaschine erkennt, dass die Energieversorgungsvorrichtung der Werkzeugmaschine entfernt wurde, während der Motor der Werkzeugmaschine angesteuert wird. Dazu kann die Werkzeugmaschine eine geeignete Sensorik umfassen. Beispielsweise kann die Sensorik dazu eingerichtet sein, zu erkennen, dass die Kommunikation zur Energieversorgungsvorrichtung unterbrochen ist. Die vorgeschlagene Werkzeugmaschine kann auch solche Sensoren umfassen, die dazu ausgebildet sind, zu erkennen, dass die Versorgungspannung der Werkzeugmaschine sehr schnell und stark einbricht. Alternativ oder ergänzend kann die Steuerelektronik bzw. die Software der Werkzeugmaschine dazu in der Lage sein zu erkennen, dass die Kommunikation mit der Energieversorgungsvorrichtung fehlerhaft bzw. gestört ist.

Bei der Energieversorgungsvorrichtung kann es sich um eine Batterie oder um einen Akkumulator ("Akku") handeln, wie sie in bekannter Weise zur Versorgung von Werkzeugmaschinen mit elektrischer Energie verwendet werden. Neben dieser Energieversorgungsvorrichtung umfasst die Werkzeugmaschine einen internen Energiespeicher, wobei dieser interne Energiespeicher vorzugsweise dazu eingerichtet ist, die Motorsteuerung der Werkzeugmaschine mit elektrischer Energie zu versorgen. Vorzugsweise stellt die Energiemenge, die von der Energieversorgungsvorrichtung an die Werkzeugmaschine zur Verfügung gestellt wird, ein Vielfaches der Energiemenge dar, die von dem internen Energiespeicher an die Motorsteuerung zur Verfügung gestellt werden kann. Vorzugsweise kann der interne Energiespeicher Kondensatoren zur kurzfristigen Speicherung von vergleichsweise geringen Energiemengen umfassen.

Die Werkzeugmaschine liegt insbesondere während ihres Betriebs mit der Energieversorgungsvorrichtung verbunden vor, so dass elektrische Energie während der Arbeit mit der Werkzeugmaschine von der Energieversorgungsvorrichtung in Richtung der Werkzeugmaschine fließen kann. Die Erfindung schlägt insbesondere ein geregeltes Bremsverfahren für den Fall vor, dass die Energieversorgungsvorrichtung während des Betriebs der Werkzeugmaschine von der Werkzeugmaschine getrennt wird. Durch die Trennung der Energieversorgungsvorrichtung von der Werkzeugmaschine wird schlagartig die Versorgung der Werkzeugmaschine mit elektrischer Energie unterbrochen. Anders als bei Werkzeugmaschinen, die aus dem Stand der Technik bekannt sind und bei denen die Werkzeugmaschine nach Entfernung der Energieversorgungsvorrichtung in einen ungeregelten Betriebszustand übergeht, kann die vorgeschlagene Werkzeugmaschine nun geregelt gebremst werden. Dieses Ziel wird insbesondere dadurch gelöst, dass eine Bremssteuerung mit zwei Schritten durchgeführt wird, wobei die einzelnen Schritte (1) und (2) der Bremssteuerung so lange wiederholt werden können, bis der interne Energiespeicher der Werkzeugmaschine nicht mehr durch elektrische Energie nachgeladen und ein Neustart der Werkzeugmaschine durchgeführt werden kann. Die elektrische Energie zum Nachladen des internen Energiespeichers stammt dabei bevorzugt aus der Umwandlung der rotatorischen Energie des Motors der vorgeschlagenen Werkzeugmaschine, die in elektrische Energie umgewandelt wird.

Es ist im Sinne der Erfindung bevorzugt, dass die Schritte der Bremssteuerung so lange wiederholt werden, bis der interne Energiespeicher der Werkzeugmaschine nicht mehr durch die Bewegungsenergie des drehenden Rotors des Motors der Werkzeugmaschine nachgeladen werden kann und ein Neustart der Werkzeugmaschine durchgeführt wird. Mit anderen Worten kann die elektrische Energie, mit der der interne Energiespeicher der Werkzeugmaschine aufgeladen wird, frühere Bewegungsenergie eines Rotors des Motors der Werkzeugmaschine darstellen. Der Rotor des Motors der Werkzeugmaschine verlangsamt seine Bewegung, wenn die Energieversorgungsvorrichtung aus der Werkzeugmaschine entfernt wird und die Energieversorgung der Werkzeugmaschine unterbrochen wird. Die durch das Abbremsen des Rotors des Motors der Werkzeugmaschine freiwerdende Bewegungsenergie kann zum Aufladen des internen Energiespeichers der Werkzeugmaschine verwendet werden.

Bei dem Schritt (1) wird der Motor der Werkzeugmaschine mit einer Einschaltdauer ED von im Wesentlichen 100 % angesteuert, bis eine interne Versorgungspannung der Werkzeugmaschine einen unteren Grenzwert erreicht hat. Es ist im Sinne der Erfindung bevorzugt, dass der untere Grenzwert in Abhängigkeit von einer minimalen Betriebsspannung der Elektronik der Werkzeugmaschine ausgewählt wird. Der Begriff "minimale Betriebsspannung" wird im Sinne der Erfindung bevorzugt als diejenige Spannung verstanden, bei der die Elektronik der Werkzeugmaschine noch sicher betrieben werden kann. Vorteilhafterweise kann mit der Erfindung die Bereitstellung von kurzen Ladepulsen ermöglicht werden, mit denen die minimale Betriebsspannung, die für den für die Steuerung erforderlich ist, sichergestellt werden kann.

Die Formulierung, dass "der Motor der Werkzeugmaschine mit einer Einschaltdauer ED von im Wesentlichen 100 % angesteuert wird", bedeutet im Sinne der Erfindung bevorzugt, dass eine Ansteuerung des Motors der Werkzeugmaschine mit einem Duty Cycle von im Wesentlichen 100 % erfolgt. Diese Ansteuerung des Motors der Werkzeugmaschine entspricht vorzugsweise einem Kurzschlussbremsen, das vorzugsweise so lange durchgeführt wird, bis die interne Versorgungspannung der Werkzeugmaschine ihren unteren Grenzwert erreicht hat. Bei der internen Versorgungspannung handelt es sich vorzugsweise um die Spannung des internen Energiespeichers der Werkzeugmaschine.

Bei dem Schritt (2) wird der Motor der Werkzeugmaschine mit einer reduzierten Einschaltdauer ED_red angesteuert. Diese reduzierte Einschaltdauer ED_red liegt bei kleiner als 100 % und wird für eine Zeitspanne delta t aufrechterhalten. Während dieser Zeitspanne delta t wird der interne Energiespeicher der Werkzeugmaschine mit elektrischer Energie aufgeladen. Insbesondere wird bei dem zweiten Schritt der Bremssteuerung der Duty Cycle für die Motorsteuerung geändert, und zwar vorzugsweise auf Werte in einem Bereich zwischen 80 und 98 %, besonders bevorzugt auf werte in einem Bereich zwischen 90 und 95 %.

Es ist im Sinne der Erfindung bevorzugt, dass die Zeitspanne delta t durch eine bestimmte Anzahl von Pulsweitenmodulationszyklen gekennzeichnet ist. Mit anderen Worten kann eine bestimmte Anzahl von PWM-Zyklen in der Zeitspanne delta t stattfinden. Der Begriff "Pulsweitenmodulationszyklus" wird im Sinne der Erfindung bevorzugt mit dem Begriff "PWM-Zyklus" abgekürzt. Vorzugsweise kann bei dem Schritt (2) der Bremssteuerung der Motor der Werkzeugmaschine mit einer reduzierten Einschaltdauer ED_red angesteuert werden, dies vorzugsweise für die Zeitspanne delta t bzw. für eine bestimmte Anzahl von PWM-Zyklen, wobei die bestimmte Anzahl von PWM-Zyklen vorzugsweise mit dieser Zeitspanne delta t korrespondiert. Während dieses zweiten Schritts der Bremssteuerung wird der interne Energiespeicher der Werkzeugmaschine mit elektrischer Energie aufgeladen, wobei dieser Vorgang im Sinne der Erfindung als "Rekuperation" bezeichnet wird. Mit anderen Worten wird bei der Rekuperation frühere Bewegungsenergie des Rotors des Motors der Werkzeugmaschine in den internen Energiespeicher der Werkzeugmaschine geladen bzw. zurückgespeist. Vorzugsweise stammt somit die elektrische Energie zum Aufladen des internen Energiespeichers aus einer Bewegungsenergie des Rotors des Motors der Werkzeugmaschine.

In einem zweiten Aspekt betrifft die Erfindung eine Werkzeugmaschine zur Durchführung des vorgeschlagenen Verfahrens. Die für das Betriebsverfahren eingeführten Begriffe, Definitionen und technischen Vorteile gelten vorzugsweise für die Werkzeugmaschine analog. Die Werkzeugmaschine weist einen Motor, eine Motorsteuerung und ein Werkzeug auf, wobei die Werkzeugmaschine zur Versorgung mit elektrischer Energie mit einer Energieversorgungsvorrichtung verbindbar ist. An der Werkzeugmaschine ist eine Bremssteuerung aktivierbar, wenn die Werkzeugmaschine erkennt, dass die Energieversorgungsvorrichtung während ihres Betriebs entfernt wurde. Die Motorsteuerung der Werkzeugmaschine wird in einem ersten Schritt der Bremssteuerung mit einer Einschaltdauer ED von im Wesentlichen 100 % betrieben, bis eine interne Versorgungspannung der Werkzeugmaschine einen unteren Grenzwert erreicht hat. In einem zweiten Schritt der Bremssteuerung wird Motorsteuerung für eine Zeitspanne delta t mit einer reduzierten Einschaltdauer ED_red betrieben, wobei während dieser Zeitspanne delta t ein interner Energiespeicher der Werkzeugmaschine mit elektrischer Energie aufgeladen wird.

Es ist im Sinne der Erfindung bevorzugt, dass der interne Energiespeicher der Werkzeugmaschine zur Versorgung der Motorsteuerung der Werkzeugmaschine mit elektrischer Energie ausgebildet ist.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:

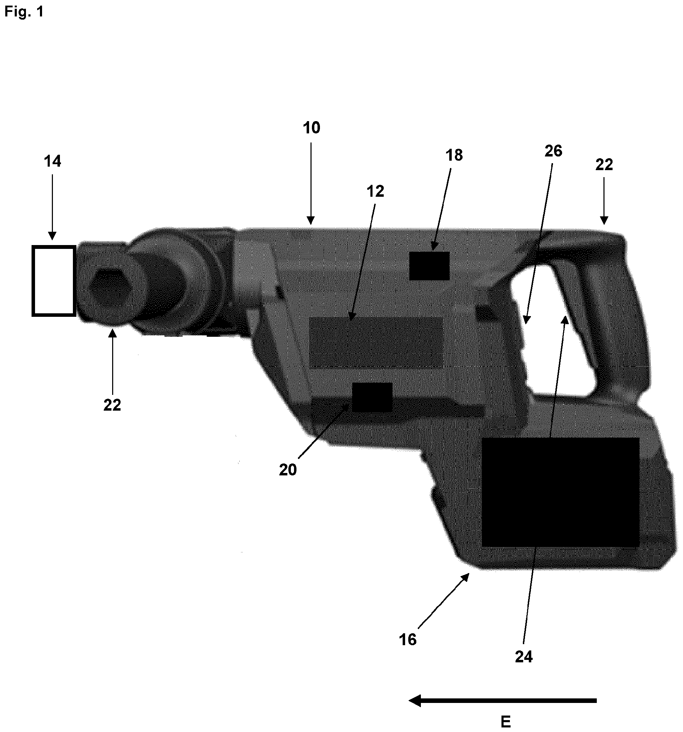

- Fig. 1: Ansicht einer bevorzugten Ausgestaltung der Werkzeugmaschine

### Ausführungsbeispiele und Figurenbeschreibung:

Figur 1 zeigt eine Werkzeugmaschine 10 mit einem Motor 12 und einem Werkzeug 14. Die in Figur 1 beispielhaft abgebildete Werkzeugmaschine 10 ist als Kernbohrgerät ausgebildet, so dass es sich bei dem Werkzeug 14 der Werkzeugmaschine 10 um eine Bohrkrone handelt. Kernbohrgeräte 10 können vorzugsweise dazu verwendet werden, im Wesentlichen zylinderförmige Kerne aus einem Untergrund, wie beispielsweise Beton, Stein oder Mauerwerk herauszuschneiden. Bei der in Figur 1 dargestellten Werkzeugmaschine 10 handelt es sich um ein batteriebetriebenes Kernbohrgerät, das eine Energieversorgungsvorrichtung 16 aufweist. Die in Figur 1 abgebildete Werkzeugmaschine 10 weist eine Energieversorgungsvorrichtung 16 auf, aber der Fachmann weiß, dass eine Werkzeugmaschine 10 selbstverständlich auch zwei oder mehr Energieversorgungsvorrichtungen 16 aufweisen kann. Die Energieversorgungsvorrichtung 16 ist dazu vorgesehen, die Werkzeugmaschine 10 bzw. ihren Motor 12 mit elektrischer Energie zu versorgen. Das Werkzeug 14 der Werkzeugmaschine 12 kann von der Drehbewegung des Motors 12 - beispielsweise über eine Spindel (nicht dargestellt) - zu einer eigenen Drehbewegung angetrieben werden. Die Energieversorgungsvorrichtung 16 kann in einer Einschubrichtung E in die Werkzeugmaschine 10 eingeschoben werden und die Energieversorgungsvorrichtung 16 kann entgegen der Einschubrichtung E aus der Werkzeugmaschine 10 entnommen werden. Bei dem Motor 12 der Werkzeugmaschine 10 handelt es sich vorzugsweise um einen bürstenlosen Motor.

Neben der Energieversorgungsvorrichtung 16 zur Versorgung der Werkzeugmaschine 10 bzw. ihres Motors 12 mit elektrischer Energie umfasst die Werkzeugmaschine 10 eine Motorsteuerung 20 zur Steuerung des Motors 12 der Werkzeugmaschine 10, sowie einen internen Energiespeicher 18. Der interne Energiespeicher 18 kann beispielsweise Kondensatoren oder andere elektronische Bauteile umfassen und dazu eingerichtet sein, elektrische Energie zu speichern und im Falle eines Bedarfs abzugeben. Der interne Energiespeicher 18 der vorgeschlagenen Werkzeugmaschine 10 ist insbesondere dazu eingerichtet, die Motorsteuerung 20 der Werkzeugmaschine 10 mit elektrischer Energie zu versorgen. Dadurch wird die Werkzeugmaschine 10 in die Lage versetzt, das vorgeschlagene Verfahren durchzuführen, dies insbesondere dann, wenn die Energieversorgungsvorrichtung 16 von der Werkzeugmaschine 10 getrennt bzw. entfernt wurde. Es stellt einen wesentlichen Vorteil der Erfindung dar, dass durch die Vorsehung des internen Energiespeichers 18 die Versorgung der Motorsteuerung 20 mit elektrischer Energie besonders lange aufrecht erhalten werden kann, vorteilhafterweise so lange, bis die Werkzeugmaschine 10 nach Entfernung der Energieversorgungsvorrichtung 16 in einen sicheren Zustand, beispielsweise einen Stillstand, überführt wurde. Der Begriff «Stillstand» wird im Sinne der Erfindung als Stillstand des Motors 12 und/oder des Werkzeugs 14 der Werkzeugmaschine 10 verstanden. Das bedeutet im Sinne der Erfindung bevorzugt, dass die Werkzeugmaschine 10 vorzugsweise dann stillsteht, wenn sich der Motor 12, d.h. seine beweglichen Teile, und/oder das Werkzeug 14 der Werkzeugmaschine 10 nicht mehr drehen. Zu den beweglichen Teilen des Motors 12 der Werkzeugmaschine 10 kann beispielsweise der Rotor (nicht dargestellt) gehören, während der Stator (nicht dargestellt) des Motors 12 nicht drehbar ausgebildet ist.

Dadurch, dass die Motorsteuerung 20 auch nach der Unterbrechung der Energieversorgung der Werkzeugmaschine 10 durch die Energieversorgungsvorrichtung 16 mit elektrischer Energie versorgt werden kann, kann die Motorsteuerung 20 die Schritte (1) und (2) der Bremssteuerung durchführen und so für ein geregeltes Abbremsen der Werkzeugmaschine 10 bzw. ihres Motors 12 bzw. ihres Werkzeugs 14 sorgen.

Die Werkzeugmaschine 10 kann darüber hinaus Griffe 22 aufweisen, mit denen der Nutzer die Werkzeugmaschine 10 halten und führen kann. Des Weiteren kann die Werkzeugmaschine 10 Schalter und Bedienelemente 24 umfassen, sowie eine Anzeigenvorrichtung 26.

### Bezugszeichenliste

- 10: Werkzeugmaschine
- 12: Motor
- 14: Werkzeug
- 16: Energieversorgungsvorrichtung
- 18: interner Energiespeicher
- 20: Motorsteuerung
- 22: Griffe
- 24: Bedienelemente
- 26: Anzeigenvorrichtung

## Patentansprüche

1. Verfahren zum Betrieb einer Werkzeugmaschine(10), wobei die Werkzeugmaschine (10) einen Motor (12), eine Motorsteuerung (20) und ein Werkzeug (14) aufweist und wobei die Werkzeugmaschine (10) zur Versorgung mit elektrischer Energie mit einer Energieversorgungsvorrichtung (16) verbindbar ist,
**gekennzeichnet durch die folgenden Verfahrensschritte:**
a) Betrieb der Werkzeugmaschine (10), wobei die Werkzeugmaschine (10) während ihres Betriebs von der Energieversorgungsvorrichtung (16) mit elektrischer Energie versorgt wird,
b) Entfernung der Energieversorgungsvorrichtung (16) während des Betriebs der Werkzeugmaschine (10),
c) Aktivierung einer Bremssteuerung der Werkzeugmaschine (10), wenn die Werkzeugmaschine (10) erkennt, dass die Energieversorgungsvorrichtung (16) während ihres Betriebs entfernt wurde, wobei die Bremssteuerung die folgenden Schritte umfasst:
(1) Ansteuerung des Motors (12) der Werkzeugmaschine (10) mit einer Einschaltdauer ED von im Wesentlichen 100 %, bis eine interne Versorgungspannung der Werkzeugmaschine (10) einen unteren Grenzwert erreicht hat,
(2) Änderung der Einschaltdauer auf eine reduzierte Einschaltdauer ED_red von kleiner als im Wesentlichen 100 % für eine Zeitspanne delta t, wobei während dieser Zeitspanne delta t ein interner Energiespeicher (18) der Werkzeugmaschine (10) mit elektrischer Energie aufgeladen wird.

2. Verfahren nach Anspruch 1,
**dadurch gekennzeichnet, dass**
die Schritte (1) und (2) der Bremssteuerung der Werkzeugmaschine (10) so lange wiederholt werden, bis der interne Energiespeicher (18) der Werkzeugmaschine (10) nicht mehr durch die elektrische Energie nachgeladen werden kann und ein Neustart der Werkzeugmaschine (10) durchgeführt wird.

3. Verfahren nach Anspruch 1 oder 2
**dadurch gekennzeichnet, dass**
die Zeitspanne delta t durch eine bestimmte Anzahl von Pulsweitenmodulationszyklen gekennzeichnet ist.

4. Verfahren nach einem der vorhergehenden Ansprüche
**dadurch gekennzeichnet, dass**
die reduzierte Einschaltdauer ED_red in einem Bereich von 80 bis 98 %, bevorzugt in einem Bereich von 90 bis 95 % liegt.

5. Verfahren nach einem der vorhergehenden Ansprüche
**dadurch gekennzeichnet, dass**
die elektrische Energie zum Aufladen des internen Energiespeichers (18) aus einer Bewegungsenergie eines Rotors des Motors (12) der Werkzeugmaschine (10) stammt.

6. Werkzeugmaschine (10) zur Durchführung des Verfahrens nach einem der vorhergehenden Ansprüche, wobei die Werkzeugmaschine (10) einen Motor (12), eine Motorsteuerung (20) und ein Werkzeug (14) aufweist und wobei die Werkzeugmaschine (10) zur Versorgung mit elektrischer Energie mit einer Energieversorgungsvorrichtung (16) verbindbar ist,
**dadurch gekennzeichnet, dass**
an der Werkzeugmaschine (10) eine Bremssteuerung aktivierbar ist, wenn die Werkzeugmaschine (10) erkennt, dass die Energieversorgungsvorrichtung (16) während ihres Betriebs entfernt wurde, wobei die Motorsteuerung (20) der Werkzeugmaschine (10) in einem ersten Schritt der Bremssteuerung mit einer Einschaltdauer ED von im Wesentlichen 100 % betreibbar ist, bis eine interne Versorgungspannung der Werkzeugmaschine (10) einen unteren Grenzwert erreicht hat und wobei die Motorsteuerung (20) der Werkzeugmaschine (10) in einem zweiten Schritt der Bremssteuerung für eine Zeitspanne delta t mit einer reduzierten Einschaltdauer ED_red betreibbar ist, wobei während dieser Zeitspanne delta t ein interner Energiespeicher (18) der Werkzeugmaschine (10) mit elektrischer Energie aufladbar ist.

7. Werkzeugmaschine (10) nach Anspruch 6
**dadurch gekennzeichnet, dass**
der interne Energiespeicher (18) der Werkzeugmaschine (10) zur Versorgung der Motorsteuerung (20) der Werkzeugmaschine (10) mit elektrischer Energie ausgebildet ist.
